# EUROPÄISCHE PATENTSCHRIFT

(11) **EP 0 284 975 B1**
(45) Veröffentlichungstag und Bekanntmachung des Hinweises auf die Patenterteilung: **23.06.1993**
(21) Anmeldenummer: 88104612.2
(22) Anmeldetag: 23.03.1988
(51) Int. Cl.: G02B 1/00, G02B 5/08, H01S 3/02, H01S 3/08

(54) **Verwendung eines Werkstoffs aus Mikroduplexgefüge**
Use of a material having a micro duplex structure
Utilisation d'une matière comportant une structure microduplex

(30) Priorität: 28.03.1987 DE 3710334
(43) Veröffentlichungstag der Anmeldung: 05.10.1988
(73) Patentinhaber: DIEHL GMBH & CO., 90478 Nürnberg (DE)
(72) Erfinder: Stadler, Hansjörg, Dr., D-8501 Rückersdorf (DE); Ruchel, Peter, Dr., D-8560 Lauf/Pegn (DE)
(74) Vertreter: Hofmann, Gerhard, Dipl.-Ing. Patentassessor

(56) Entgegenhaltungen:
- GB-A- 2 004 912
- GB-A- 2 011 948

## Beschreibung

Zur Umlenkung von Laserstrahlen, sei es im Laser selbst oder außerhalb, werden Metallspiegel hoher Güte benötigt, welche nachfolgend kurz als Laserspiegel bezeichnet werden sollen. Derartige Laserspiegel benötigen eine sehr gute Spiegeloberfläche, ein hohes Reflexionsvermögen und eine gute geometrische Planität sowie eine hohe Oberflächenhärte.

Die derzeit üblichen Metallspiegel werden vorzugsweise aus polykristallinem Messing oder Kupfer hergestellt und erhalten durch eine Oberflächenbehandlung wie beispielsweise Diamantpolieren die geforderten optischen Eigenschaften. Bei der Bearbeitung derartiger Metallspiegel kommt man immer mehr an eine materialbedingte natürliche Grenze bei der Oberflächengüte. Bei der Rauhtiefe der Oberfläche scheint man Werte von 3 nm (Nanometer) nicht unterschreiten zu können, durch Stufenbildung der Oberfläche aufgrund der maschinellen Bearbeitung kann man derzeit 40 nm in der Welligkeit der Oberfläche nicht unterschreiten. Durch diese beiden Merkmale, nämlich Rauhtiefe und Stufenbildung wird die optische Qualität der Spiegeloberfläche und damit die Streuung des Laserstrahls entscheidend bestimmt. Die vorgenannte Stufenbildung entsteht durch die maschinelle Bearbeitung der Oberfläche eines polykristallinen Materials dadurch, daß das Korn an der Oberfläche in unterschiedlichem Maße dem bearbeitenden Werkzeug ausweicht und nach der Bearbeitung wieder in seine Ruhelage zurückkehrt. Je nach Materialzusammensetzung und Kristallstruktur ergeben sich - nur unter dem Mikroskop sichtbare - Felder, die gegeneinander stufig entsprechend den Korngrenzen abgesetzt sind.

Eine Überschreitung der vorgenannten Grenzen erscheint bei dem heutigen Stand der Technik der Bearbeitungsmaschinen nur durch den Einsatz neuer Materialien für die Spiegel möglich zu sein.

Es wurde nun gefunden, daß Messing mit einem an sich bekannten Mikroduplexgefüge eine deutliche Verbesserung der Eigenschaften von Laserspiegeln bringt. Ein derartiges Material hat von Natur aus einen mikrokristallinen Aufbau, besitzt Spannungsfreiheit, eine hohe Steifigkeit und gute Materialhärte. Man erreicht mit gleicher Bearbeitungstechnik wie bei herkömmlichen Messingen einen Faktor 5 - 10 bessere Oberflächengüte, wobei die Rauhtiefe wenigstens um einen Faktor 2 - 3 und die Welligkeit um einen Faktor bis zu 10 besser ist als bei herkömmlichen Messingen. Die Planität eines Laserspiegels aus Mikroduplexmaterial ist die gleiche wie bei herkömmlichem Messing, das Reflexionsvermögen des Materials an sich ist eher besser als bei üblichen Spiegeln aus gleichem Material. Von Natur aus ist jedoch der Reflexionsfaktor von Messingen deutlich geringer als der von Kupfer. Mikroduplexmessing ist wesentlich härter als Kupfer und deutlich billiger als entsprechende monokristalline Materialien mit vergleichbaren Struktureigenschaften. Bedingt durch die mikrokristalline Ausbildung des Gefüges ist die Stufenbildung an der Oberfläche eines Spiegels erheblich geringer als die herkömmlicher Messingmaterialien, die Streuung des Laserstrahls somit also ebenfalls geringer. Dies ist umso wichtiger, je kurzwelliger die Strahlung des umzulenkenden Laserstrahles ist. Im Hinblick auf das materialbedingte nur mäßige Reflexionsvermögen wird man Spiegel aus Mikroduplexmessing in erster Linie für Laser geringerer Leistung verwenden. Aufgrund der sehr guten Formsteifigkeit des Materials sind jedoch Spiegel großer Durchmesser herstellbar, welche bei Anwendung geeigneter Maßnahmen eine hohe Planität besitzen und bei Laserbeschuß auch behalten. Da das Mikroduplexmaterial bei der Herstellung in relativ geringen Dicken anfällt, empfiehlt sich für die Spiegelherstellung die Aufbringung des Materials auf einen formstabilen Träger mit guter Wärmeleitfähigkeit.

Mikroduplexmessing ist bereits bekannt; wir verweisen auf die deutschen Patentschriften 27 42 008 und 27 58 822 der Anmelderin. Dort sind zwei mögliche Herstellungsverfahren für ein Messing mit Mikroduplexgefüge beschrieben, welche im vorliegenden Falle angewandt werden können. Der Messingwerkstoff gemäß der Erfindung soll einen theoretischen Kupfergehalt gemäß der Definition dieser Größe in DE-C-27 58 822 von 61 bis 65 % Kupfer, Rest Zink besitzen. Entsprechend der Lehre von Guillet zum theoretischen Kupfergehalt - siehe Patentschrift 27 58 822 - kann Kupfer oder Zink teilweise durch bis zu 5 % eines oder mehrerer der Elemente Nickel, Aluminium, Mangan, Silizium, Kobalt oder Zinn ersetzt sein. Vorzugsweise besteht der Messingwerkstoff jedoch aus etwa 62 % Kupfer und 38 % Zink. Als Härte dieser binären Legierung wurde HV 150 gemessen, die Festigkeit wurde mit mindestens 500 N/mm² festgestellt. Bei Mehrstoffssystemen können die vorgenannten Werte gesteigert werden.

Die praktische Erprobung des Materials hat gezeigt, daß bei gleichen Oberflächenbearbeitungs-Verfahren wie bei herkömmlichen Messingen Laserspiegel wesentlich besserer Qualität als bisher hergestellt werden können.

## Patentansprüche

1. Verwendung eines Messingwerkstoffs aus Mikroduplexgefüge als Spiegelfläche für Laserspiegel.

2. Verwendung eines Messingwerkstoffs aus Mikroduplexgefüge nach Anspruch 1,
wobei der Messingwerkstoff einen theoretischen Kupfergehalt - gemäß der Definition dieser Größe in DE-C-27 58 822 von 61 bis 65 % Kupfer, Rest Zink besitzt.

3. Verwendung eines Messingwerkstoffs aus Mikroduplexgefüge nach Anspruch 2,
wobei bei dem Messingwerkstoff Kupfer und Zink teilweise ersetzt sind durch bis zu 5 % eines oder mehrerer der Elemente Nickel, Aluminium, Mangan, Silizium, Kobalt, Zinn.

4. Verwendung eines Messingwerkstoffs aus Mikroduplexgefüge nach Anspruch 1,
wobei der Messingwerkstoff einen Gehalt von 62 % Kupfer und 38 % Zink besitzt.

## Claims

1. Use of a brass material consisting of a microduplex structure as reflector surface for laser mirrors.

2. Use of a brass material consisting of a microduplex structure according to claim 1, in which respect the brass material possesses a theoretical copper content in accordance with the definition of this quantity in DE-C-27 58 822 of 61 up to 65% copper, the remainder being zinc.

3. Use of a brass material consisting of a microduplex structure according to claim 2, in which respect in the case of the brass material copper and zinc are partially replaced by up to 5% of one or more of the elements nickel, aluminium, manganese, silicon, cobalt, tin.

4. Use of a brass material consisting of a microduplex structure according to claim 1, in which respect the brass material possesses a content of 62% copper and 38% zinc.

## Revendications

1. Utilisation d'un matériau à base de laiton à structure microduplex comme surface réfléchissante pour miroirs de laser.

2. Utilisation d'un matériau en laiton à structure microduplex selon la revendication 1, dans laquelle le matériau à base de laiton a une teneur en cuivre théorique, selon la définition de cette grandeur dans le brevet DE-C-27 58 822, comprise entre 61 et 65 % de cuivre, le reste étant du zinc.

3. Utilisation d'un matériau en laiton à structure microduplex selon la revendication 2, dans laquelle le cuivre et le zinc du matériau en laiton sont partiellement remplacés par une quantité pouvant aller jusqu'à 5 % d'un ou de plusieurs des éléments nickel, aluminium, manganèse, silicium, cobalt et étain.

4. Utilisation d'un matériau en laiton à structure microduplex selon la revendication 1, dans laquelle le matériau en laiton contient 62 % de cuivre et 38 % de zinc.
